# EUROPEAN PATENT SPECIFICATION

(11) **EP 2 071 921 B1**
(45) Date of publication and mention of the grant of the patent: **11.01.2012**
(21) Application number: 07820964.0
(22) Date of filing: 05.10.2007
(51) Int. Cl.: B62B 7/14, B62B 9/28

(54) **VEHICLE FRAME ASSEMBLY**
FAHRZEUGRAHMENANORDNUNG
ENSEMBLE DE CHÂSSIS DE VÉHICULE

(30) Priority: 06.10.2006 GB 0619755
(43) Date of publication of application: 24.06.2009
(73) Proprietor: SCS (London) Limited, Letchworth Garden City, Hertfordshire SG6 1LP (GB)
(72) Inventor: OFFORD, David Leslie, Berkshire SL6 6HH (GB)
(74) Representative: Burrows, Anthony Gregory
(86) International application number: PCT/EP2007/060590
(87) International publication number: WO 2008/040797

(56) References cited:
- DE-U1- 29 814 902
- FR-A- 2 743 539
- GB-A- 2 431 140
- US-A1- 2003 075 903
- US-A1- 2005 093 259

## Description

This invention relates to an apparatus and method for the mounting of child-carrying units to a frame assembly.

DE-U-29814902 according to the preambles of claim 1 and of claim 11, discloses a perambulator having two seat/recliner inserts fixed directly or indirectly on a support frame. The connecting area for the first insert is vertically offset from the connecting area of the second insert so that the end areas of the two inserts overlap. The areas of the inserts can overlap at the foot and/or head end. The seat inserts are fixed on just two plate-shaped adaptors attached to the support frame at the sides.

According to claim 1 of the present invention, there is provided a vehicle frame assembly which includes an interface portion having first and second mounting regions for releasably mounting on said assembly, one behind the other, respective first and second child-carrying units in an echelon formation upwardly relative to said assembly wherein said interface portion is a sub-frame assembly detachably connected to said frame assembly characterised in that said sub-frame assembly is supportedly connected to said frame assembly at opposite lateral regions, at a forward region and at a rearward region of said sub-frame assembly.

According to claim 11 of the present invention, there is provided a method of mounting first and second child-carrying units one behind the other, in an echelon formation upwardly, on a vehicle frame assembly, comprising mounting on a first mounting region of an interface portion of said assembly the first child-carrying unit and mounting on a second mounting region of said interface portion the second child-carrying unit at a higher level than the first unit, wherein said interface portion is a sub-frame assembly for detachably connecting to said frame assembly characterised in that said sub-frame assembly as supportedly connected to said frame assembly at opposite lateral regions, at a forward region and at a rearward region of said sub-frame assembly.

Owing to these two aspects of the present invention, it is possible to provide a frame assembly capable of supporting two children which is relatively stable when weight is applied to one or both child-carrying units.

The vehicle frame assembly is, advantageously, a frame assembly for a wheeled vehicle, such as a perambulator.

By use of a sub-fame assembly detachably connected to the frame assembly, a single frame assembly can be converted between single and dual occupancy configurations by the addition of the interface portion.

The first and second mounting regions of the interface portion are arranged to be at different heights above the ground.

The first and second child-carrying units are positioned one in front of the other on the interface portion.

In order that the invention can be clearly and completely disclosed, reference will now be made, by way of example, to the accompanying drawings in which:-
Figure 1 is a perspective view from above of a vehicle with a frame assembly and an interface portion with two child seats in a rear-facing configuration,
Figure 2 is a perspective view of the vehicle with the child seats in a forward-facing configuration,
Figure 3 is a perspective view of the vehicle with the seats in the forward-facing configuration, but with all the textile materials removed,
Figure 4 is a side elevation of the frame assembly of the vehicle with the interface portion,
Figure 5 is a side elevation of only the interface portion,
Figure 6 is an end elevation of only the interface portion,
Figure 7 is a plan view of only the interface portion, and
Figure 8 is a perspective view of the interface portion in a folded condition.

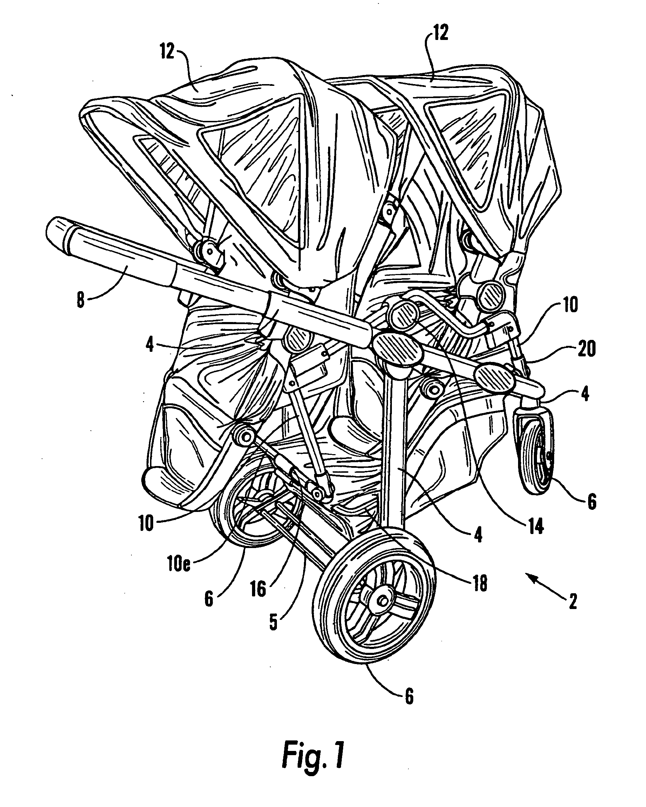

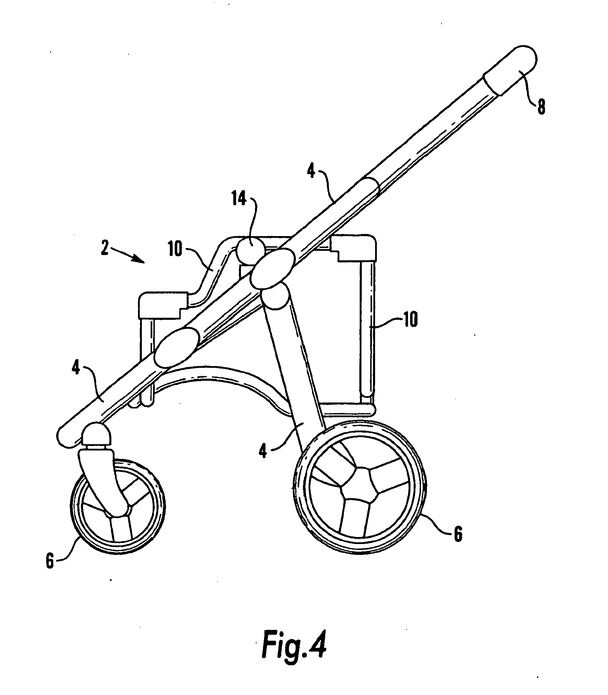

Referring to Figures 1 to 4, a vehicle 2 for transporting children comprises a frame assembly 4, a plurality of ground-contacting wheels 6 attached to the frame assembly 4, and a handle 8 for grasping by the controller of the vehicle. The handle is a substantially inverted U-shaped member telescopically attached to the frame assembly 4 and a foot brake 5 is fitted to act upon the larger rear wheels 6. The vehicle 2 also includes an interface portion 10 which forms a sub-frame of the frame assembly 4 and which has mounted thereon, one behind the other, two child-carrying units in the form of seats 12 (with adjustable sun canopies).

The interface portion 10 is detachably connected to the frame assembly 4 by means of conventional self-locking insert-in-socket connectors 14 at central regions of respective lateral sides of the interface portion 10.

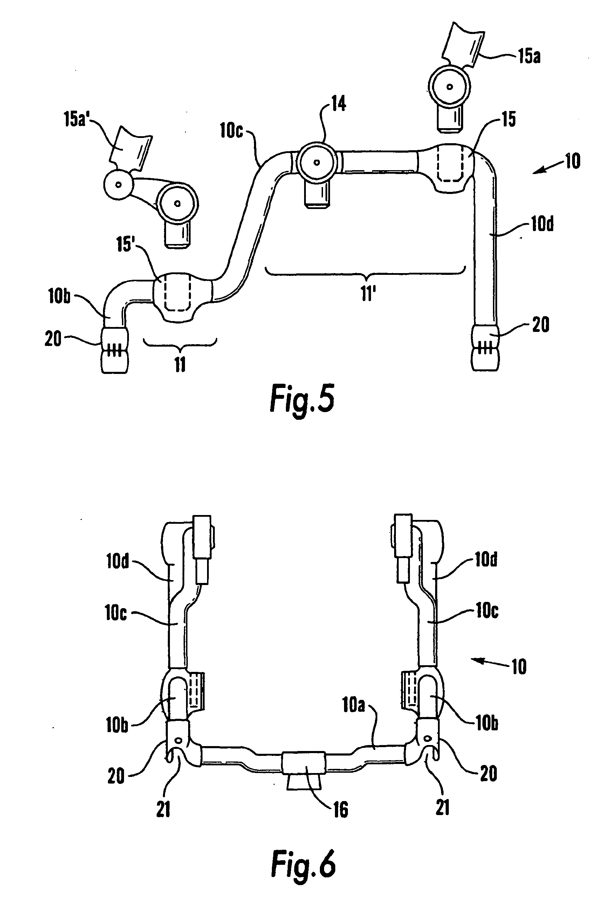

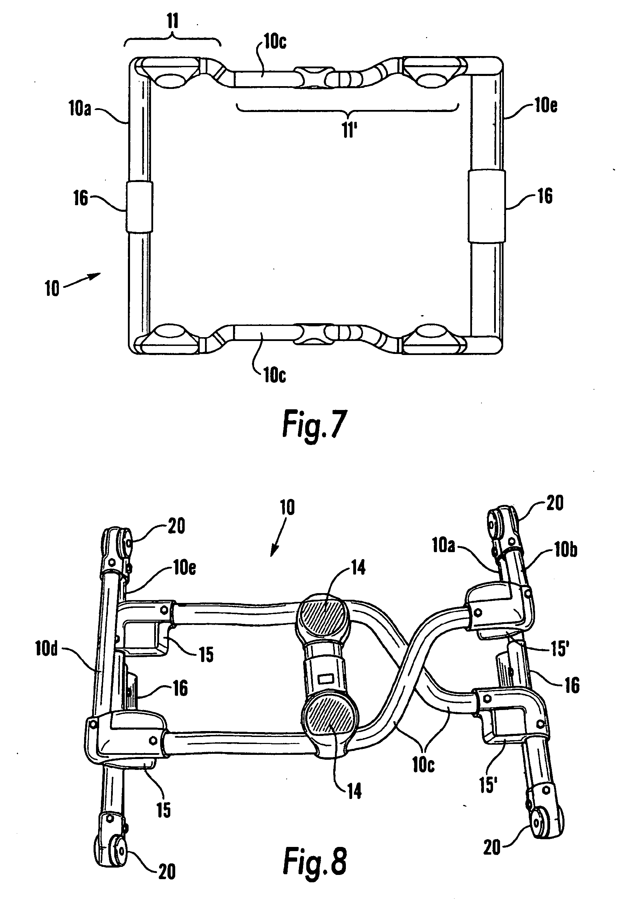

Referring to Figures 5 to 7, the interface portion 10 is substantially rectangular in plan view (see Figure 7). It has an end crossbar member 10a connected to a pair of short substantially vertical struts 10b, each connected to a lateral bar 10c arranged substantially parallelly to each other, which are each connected to longer substantially vertical struts 10d extending downwardly and at their lower ends connecting to a second end crossbar member 10e, located at substantially the same level and being of substantially the same length as the end crossbar member 10a. Each lateral bar 10c includes a double-curved section towards the end where the shorter substantially vertical struts 10b are located, each double-curved section extending in respective substantially vertical planes arranged parallelly to each other. The double-curved section thereby forms two substantially horizontal sections 11 and 11', the section 11' being at a higher level in the substantially vertical plane than the section 11. Respective sections 11' also include, proximal to the double-curve section, one part of the insert-in-socket connectors 14 for connecting the interface portion 10 to the frame assembly 4. Distal of the double-curve, the section 11' also includes sockets 15 for receiving an insert of an adaptor piece 15a in a self-locking manner. Similarly, the lower section 11 includes sockets 15' for receiving the insert of an adaptor 15a'.

The adaptors used can vary depending on the type of child-carrying unit to be attached to the interface portion 10. The vehicle 2 shown is capable of receiving, in addition to the seats 12 shown, infant car seats and carrycots, or a combination of such units.

The interface portion 10, in order to achieve suitable stability, is also supported at other locations on the vehicle 2, other than through the connectors 14 mentioned above.

Referring again to Figure 1, the crossbar member 10e of the interface portion 10 has, at its central region, a clip 16 which clips onto a parallelly arranged rear crossbar of a basket frame 18, itself attached to the frame assembly 4. At the front end of the interface portion 10, corner pieces 20 between the shorter of the vertical struts 10b and the crossbar 10a are shaped so as to include a channel 21 (shown in Figure 6) in order to closely receive and rest on top of forward portions of the basket frame 18.

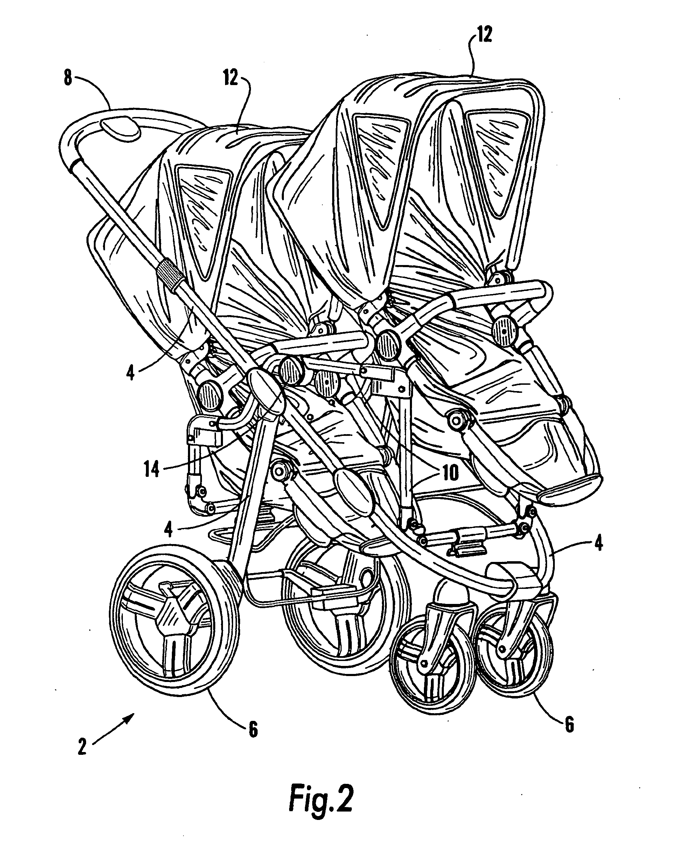

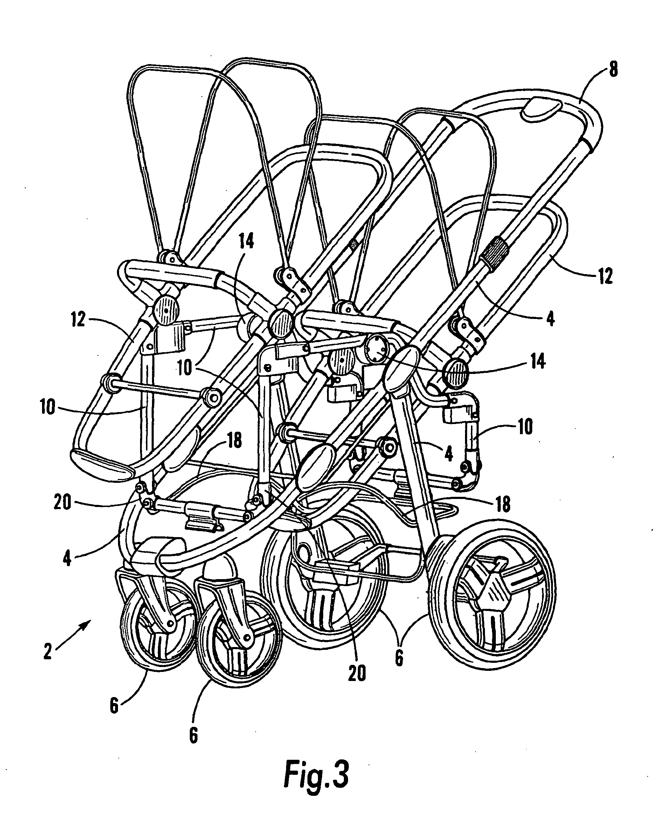

Referring again to Figures 2 and 3, the interface portion 10 is dimensioned so as to be, when detached from the frame assembly 4, turned through 180° about its central vertical axis so that the seats 12 can, instead of being arranged in the rearward-facing configuration shown in Figure 1, be arranged in a forward-facing configuration. In order to maintain stability of the interface portion 10 for this seating configuration, the crossbar member 10a also includes a clip 16 for attaching to the basket frame 18 and also has corner pieces 20 with channels 21 between the longer vertical struts 10d and the crossbar 10e to closely receive and rest on top of forward portions of the basket frame 18.

Whichever seating configuration is preferred, the seats 12 are arranged in a compact echelon formation, the seat 12 being mounted the interface portion 10 at section 11' in the respective sockets 15 being slightly higher than the other seat 12 mounted on the section 11. There is also some degree of overlap between the rear part of the higher positioned seat 12 and the front part of the lower positioned seat 12, whilst still allowing a child to sit comfortably in the lower seat. The seats 12 are also capable, as is conventional, of reclining, typically thorough an angle of approximately 45° to a substantially horizontal position in order to accommodate very young children, such as babies. Even when the higher seat 12 is fully reclined, there is still sufficient room for a child to sit comfortably in the lower seat 12. This formation allows the vehicle to have good stability as any weight applied to either seat 12 is close to the centre of gravity of the vehicle 2 to prevent any dangerous tilting or toppling over of the vehicle.

Referring to Figure 8, the interface portion 10 can be folded to an almost flat state for significantly reducing the volume of space occupied for storage and transportation purposes. By providing hinged corner pieces 20 each lateral side of the interface portion 10, comprised of one substantially vertical strut 10b, one lateral bar 10c and one substantially vertical strut 10d, is collapsible inwardly so that, in the folded state, the interface portion 10 lies in a single plane.

## Claims

1. A vehicle frame assembly (4) which includes an interface portion (10) having first and second mounting regions (11,11') for releasably mounting on said assembly, one behind the other, respective first and second child-carrying units (12) in an echelon formation upwardly relative to said assembly (4) wherein said interface portion (10) is a sub-frame assembly detachably connected to said frame assembly (4) **characterised in that** said sub-frame assembly (10) is supportedly connected to said frame assembly (4) at opposite lateral regions, at a forward region and at a rearward region of said sub-frame assembly.

2. A vehicle frame assembly (4) according to claim 1, wherein said first and second mounting regions (11,11') of said interface portion (10) are arranged at different heights above the ground.

3. A vehicle frame assembly (4) according to claim 1 or 2, wherein said sub-frame assembly (10) is substantially rectangular in plan view.

4. A vehicle frame assembly (4) according to claim 2, or claim 3 as appended to claim 2, wherein said sub-frame assembly (10) includes a pair of lateral bars (10c) arranged substantially parallelly to each other, each lateral bar (10c) having a double-curved section which lies in a substantially vertical plane.

5. A vehicle frame assembly (4) according to any preceding claim, wherein said sub-frame assembly (10) is rotatable, in the detached state, about its central vertical axis so that the child-carrying units (12) can be arranged in a forward-facing or a rearward-facing configuration.

6. A vehicle frame assembly (4) according to claim 2, or any one of claims 3 to 5 as appended to claim 2, wherein the rear part of the higher positioned child-carrying unit (12) overlaps partially the front part of the lower positioned child-carrying unit (12).

7. A vehicle frame assembly (4) according to any preceding claim, wherein said sub-frame assembly (10) is foldable to lie in a single plane.

8. A vehicle frame assembly (4) according to any preceding claim, wherein said sub-frame assembly (10) comprises respective clips (16) at the forward and rearward regions and connectors (14) at respective lateral sides for supportingly attaching said sub-frame assembly (10) to said frame assembly (4).

9. A vehicle frame assembly (4) according to claim 8, wherein said forward region of said sub-frame (10) further comprises respective corner pieces (20) which include channels (21) which are further supportingly received by said frame assembly.

10. A vehicle frame assembly (4) according to claim 8 or 9, wherein said sub-frame assembly (10) is supported at the forward and rearward regions by a basket frame (18) of said frame assembly (4).

11. A method of mounting first and second child-carrying units (12) one behind the other, in an echelon formation upwardly, on a vehicle frame assembly (4), comprising mounting on a first mounting region (11) of an interface portion (10) of said assembly (4) the first child-carrying unit (12) and mounting on a second mounting region (11') of said interface portion (10) the second child-carrying unit (12) at a higher level than the first unit (12), wherein said interface portion (10) is a sub-frame assembly for detachably connecting to said frame assembly (4) **characterised in that** said sub-frame assembly (10) is supportedly connected to said frame assembly (4) at opposite lateral regions, at a forward region and at a rearward region of said sub-frame assembly (10).

12. A method according to claim 11, wherein said supporting comprises connecting respective connectors (14) at respective lateral sides of said sub-frame assembly (10) and respective clips (16) at said forward and rearward regions of said sub-frame assembly (10) to said frame assembly (4).

13. A method according to claim 12, and further comprising receiving said frame assembly (4) in channels (21) formed in respective corner pieces (20) of said forward region of said sub-frame assembly (10).

14. A method according to any one of claims 11 to 13, and further comprising, in the detached state, rotating said sub-frame assembly (10) about its central vertical axis for a forward-facing or a rearward-facing configuration of the child-carrying units (12).

15. A method according to claim 14, and in the detached state, folding said interface portion (10) so as to lie in a single plane.

## Patentansprüche

1. Fahrzeugrahmenanordnung (4), die einen Übergangsabschnitt (10) mit ersten und zweiten Befestigungsbereichen (11,11') aufweist, um an der Anordnung jeweilige erste und zweite Kindertrageinheiten (12) hintereinander in einer relativ zu der Anordnung (4) nach oben hin verlaufenden Staffelformation lösbar zu befestigen, wobei der Übergangsabschnitt (10) eine Unter-Rahmenanordnung ist, die abnehmbar mit der Rahmenanordnung (4) verbunden ist, **dadurch gekennzeichnet, dass** die Unter-Rahmenanordnung (10) mit der Rahmenanordnung (4) an gegenüberliegenden seitlichen Bereichen eines vorderen Bereichs und an einem hinteren Bereich der Unter-Rahmenanordnung gestützt verbunden ist.

2. Fahrzeugrahmenanordnung (4) nach Anspruch 1, bei der die ersten und zweiten Befestigungsbereiche (11,11') des Übergangsabschnitts (10) in unterschiedlichen Höhen über dem Boden angeordnet sind.

3. Fahrzeugrahmenanordnung (4) nach Anspruch 1 oder 2, bei der die Unter-Rahmenanordnung (10) in Draufsicht im Wesentlichen rechteckig ist.

4. Fahrzeugrahmenanordnung (4) nach Anspruch 2, oder 3 in Ergänzung zu Anspruch 2, bei der die Unter-Rahmenanordnung (10) ein Paar seitlicher Stangen (10c) aufweist, die im Wesentlichen parallel zueinander angeordnet sind, wobei jede seitliche Stange (10c) einen Doppelkurvenabschnitt aufweist, der in einer im Wesentlichen vertikalen Ebene liegt.

5. Fahrzeugrahmenanordnung (4) nach einem der vorhergehenden Ansprüche, bei der die Unter-Rahmenanordnung (10) im gelösten Zustand um ihre vertikale Mittelachse drehbar ist, so dass die Kindertrageinheiten (12) in einer nach vorne weisenden oder einer nach hinten weisenden Konfiguration angeordnet werden können.

6. Fahrzeugrahmenanordnung (4) nach Anspruch 2, oder einem der Ansprüche 3 bis 5 in Ergänzung zu Anspruch 2, bei der der hintere Teil der höher positionierten Kindertrageinheit (12) den vorderen Teil der tiefer positionierten Kindertrageinheit (12) teilweise überlappt.

7. Fahrzeugrahmenanordnung (4) nach einem der vorhergehenden Ansprüche, bei der die Unter-Rahmenanordnung (10) derart zusammenklappbar ist, dass sie in einer einzigen Ebene liegt.

8. Fahrzeugrahmenanordnung (4) nach einem der vorhergehenden Ansprüche, bei der die Unter-Rahmenanordnung (10) jeweilige Clips (16) an den vorderen und hinteren Bereichen und Konnektoren (14) an jeweiligen Lateralseiten aufweist, um die Unter-Rahmenanordnung (10) gestützt an der Fahrzeugrahmenanordnung (4) zu befestigen.

9. Fahrzeugrahmenanordnung (4) nach Anspruch 8, bei der der vordere Bereich des Unterrahmens (10) ferner jeweilige Eckstücke (20) aufweist, die Kanäle (21) enthalten, welche zudem gestützt von der Rahmenanordnung aufgenommen sind.

10. Fahrzeugrahmenanordnung (4) nach Anspruch 8 oder 9, bei der die Unter-Rahmenanordnung (10) an den vorderen und hinteren Bereichen von einem Korbrahmen (18) der Rahmenanordnung (4) gehalten ist.

11. Verfahren, um an einer Fahrzeugrahmenanordnung (4) erste und zweite Kindertrageinheiten (12) hintereinander in einer nach oben hin verlaufenden Staffelformation zu befestigen, mit folgenden Schritten: Befestigen der ersten Kindertrageinheit (12) an einem ersten Befestigungsbereich (11) eines Übergangsabschnitts (10) der Anordnung (4), und Befestigen der zweiten Kindertrageinheit (12) an einem zweiten Befestigungsbereich (11') des Übergangsabschnitts (10) auf einer höheren Ebene als derjenigen der ersten Einheit (12), wobei der Übergangsabschnitt (10) eine Unter-Rahmenanordnung zur abnehmbaren Verbindung mit der Rahmenanordnung (4) ist, **dadurch gekennzeichnet, dass** die Unter-Rahmenanordnung (10) mit der Rahmenanordnung (4) an gegenüberliegenden seitlichen Bereichen eines vorderen Bereichs und an einem hinteren Bereich der Unter-Rahmenanordnung (10) gestützt verbunden ist.

12. Verfahren nach Anspruch 11, bei dem das Haltern einen Schritt umfasst, bei dem jeweilige Konnektoren (14) an jeweiligen Lateralseiten der Unter-Rahmenanordnung (10) und jeweilige Clips (16) an den vorderen und hinteren Bereichen der Unter-Rahmenanordnung (10) mit der Rahmenanordnung (4) verbunden werden.

13. Verfahren nach Anspruch 12, bei dem ferner die Rahmenanordnung (4) in Kanälen (21) aufgenommen wird, die in jeweiligen Eckstücken (20) der vorderen Bereichs der Unter-Rahmenanordnung (10) ausgebildet sind.

14. Verfahren nach einem der Ansprüche 11 bis 13, bei dem ferner die Unter-Rahmenanordnung (10) im gelösten Zustand um ihre vertikale Mittelachse gedreht wird, um eine nach vorne weisende oder eine nach hinten weisende Konfiguration der Kindertrageinheiten (12) zu erzielen.

15. Verfahren nach Anspruch 14, bei dem im gelösten Zustand der Übergangsabschnitt (10) derart zusammengeklappt wird, dass er in einer einzigen Ebene liegt.

## Revendications

1. Ensemble de châssis de véhicule (4) qui inclut une portion d'interface (10) présentant une première et une seconde régions de montage (11, 11') permettant de monter, de manière séparable, sur ledit ensemble, l'un derrière l'autre, respectivement un premier et un deuxième sièges de transport d'enfant (12) en une formation en échelon vers le haut par rapport au dit ensemble (4), dans lequel ladite portion d'interface (10) est un sous-ensemble de châssis raccordé de manière détachable au dit ensemble de châssis (4), **caractérisé en ce que** ledit sous-ensemble de châssis (10) est raccordé, en appui, au dit ensemble de châssis (4), au niveau de régions latérales opposées, au niveau d'une région avant et d'une région arrière dudit sous ensemble de châssis.

2. Ensemble de châssis de véhicule (4) selon la revendication 1, dans lequel lesdites première et seconde régions de montage (11, 11') de ladite portion d'interface (10) sont agencées à différentes hauteurs au-dessus du sol.

3. Ensemble de châssis de véhicule (4) selon la revendication 1 ou 2, dans lequel ledit sous-ensemble de châssis (10) est sensiblement rectangulaire en vue en plan.

4. Ensemble de châssis de véhicule (4) selon la revendication 2, ou la revendication 3, en ce qu'elle est dépendante de la revendication 2, dans lequel ledit sous-ensemble de châssis (10) inclut une paire de barres latérales (10c) agencées de manière à être sensiblement parallèles l'une par rapport à l'autre, chaque barre latérale (10c) présentant une section doublement incurvée qui se trouve dans un plan sensiblement vertical.

5. Ensemble de châssis de véhicule (4) selon l'une quelconque des revendications précédentes, dans lequel ledit sous-ensemble de châssis (10) peut tourner, à l'état détaché, autour de son axe vertical central de telle sorte que les sièges de transport d'enfant (12) puissent être agencés en une configuration faisant face vers l'avant ou faisant face vers l'arrière.

6. Ensemble de châssis de véhicule (4) selon la revendication 2, ou selon l'une quelconque des revendications 3 à 5, en ce qu'elles sont dépendantes de la revendication 2, dans lequel la partie arrière la plus haute du siège de transport d'enfant (12) chevauche partiellement la partie avant la plus basse du siège de transport d'enfant (12).

7. Ensemble de châssis de véhicule (4) selon l'une quelconque des revendications précédentes, dans lequel ledit sous-ensemble de châssis (10) peut se replier pour se trouver dans un plan unique.

8. Ensemble de châssis de véhicule (4) selon l'une quelconque des revendications précédentes, dans lequel ledit sous-ensemble de châssis (10) comprend des pinces (16) respectives au niveau des régions avant et arrière et des pièces de jonction (14) au niveau des côtés latéraux afin de fixer, en appui, ledit sous-ensemble de châssis (10) sur ledit ensemble de châssis (4).

9. Ensemble de châssis de véhicule (4) selon la revendication 8, dans lequel ladite région avant dudit sous-ensemble de châssis (10) comprend en outre des cornières (20) respectives, qui incluent des canaux (21) qui sont reçus, en appui, par ledit ensemble de châssis.

10. Ensemble de châssis de véhicule (4) selon la revendication 8 ou 9, dans lequel ledit sous-ensemble de châssis (10) est en appui, au niveau des régions avant et arrière, sur un châssis de nacelle (18) dudit ensemble de châssis (4).

11. Procédé pour monter des premier et second sièges de transport d'enfant (12) l'un derrière l'autre, suivant une formation d'échelon vers le haut, sur un ensemble de châssis de véhicule (4), comprenant le montage sur une première région de montage (11) d'une portion d'interface (10) dudit ensemble (4) du premier siège de transport d'enfant (12) et le montage sur une seconde région de montage (11') de ladite portion d'interface (10) du second siège de transport d'enfant (12) à un niveau plus élevé que le premier siège de transport d'enfant (12), dans lequel ladite portion d'interface (10) est un sous-ensemble de châssis permettant le raccordement, de manière détachable, sur ledit ensemble de châssis (4), **caractérisé en ce que** ledit sous-ensemble de châssis (10) est raccordé, en appui sur ledit ensemble de châssis (4) au niveau de régions latérales opposées, au niveau d'une région avant et d'une région arrière dudit sous-ensemble de châssis (10).

12. Procédé selon la revendication 11, dans lequel ledit support comprend le raccordement de pièces de jonction (14) respectives au niveau des côtés latéraux dudit sous-ensemble de châssis (10) et des pinces (16) respectives au niveau desdites régions avant et arrière dudit sous-ensemble de châssis (10) sur ledit ensemble de châssis (4).

13. Procédé selon la revendication 12, et comprenant en outre la réception dudit ensemble de châssis (4) dans des canaux (21) formés dans les cornières (20) respectives de ladite région avant dudit sous-ensemble de châssis (10).

14. Procédé selon l'une quelconque des revendications 11 à 13, et comprenant en outre, à l'état détaché, la rotation dudit sous-ensemble de châssis (10) autour de son axe central vertical pour obtenir une configuration tournée vers l'avant ou tournée vers l'arrière du siège de transport d'enfant (12).

15. Procédé selon la revendication 14, et à l'état détaché, permettant de replier ladite portion d'interface (10) de manière à ce qu'elle se trouve dans un plan unique.
